# EUROPEAN PATENT APPLICATION

(11) **EP 4 579 877 A1**
(43) Date of publication of application: **02.07.2025**
(21) Application number: 23859227.3
(22) Date of filing: 24.08.2023
(51) Int. Cl.: H01M 10/613, H01M 10/655, H01M 50/502, H01M 50/20

(54) **BATTERY PACK AND ELECTRIC DEVICE**

(30) Priority: 30.08.2022 CN 202211046229
(71) Applicant: Xiamen Ampack Technology Limited, Xiamen City, Fujian Province, 361000 (CN)
(72) Inventor: PENG, Fanggui, Xiamen, Fujian 361000 (CN); YANG, Pengcheng, Xiamen, Fujian 361000 (CN); LIU, Xiaoping, Xiamen, Fujian 361000 (CN); ZHOU, Quan, Xiamen, Fujian 361000 (CN)
(74) Representative: Icosa
(86) International application number: PCT/CN2023/114575
(87) International publication number: WO 2024/046194

(57) **Abstract**

This application provides a battery pack and an electrical device. The battery pack includes a housing assembly, a first connecting piece, and a cell assembly. The housing assembly includes a first space. The housing assembly is provided with a first opening and a second opening both communicating with the first space. The first connecting piece is accommodated in the first space. The first connecting piece is provided with a first channel. The first opening communicates to the second opening through the first channel. At least a part of the cell assembly is disposed in the first space. Along a first direction, a projection of the first opening and a projection of the cell assembly are spaced apart from each other, a projection of the second opening the projection of the cell assembly are spaced apart from each other. The first direction is a stacking direction of battery cells in the cell assembly. The heat of the cell assembly in the battery pack flows in the first channel through external air and is dissipated to an external environment, thereby improving the heat dissipation efficiency of the cell assembly.

## Description

### TECHNICAL FIELD

This application relates to the technical field of energy storage, and in particular, to a battery pack and an electrical device.

### BACKGROUND

A battery pack generates a lot of heat during operation. To prevent overheating of the battery pack, the heat of the battery pack needs to be dissipated. A conventional heat dissipation method currently available is to add heat sinks between battery cells. However, in this heat dissipation method, the heat dissipation speed is relatively slow, the heat dissipation effect for the battery pack is limited, and an adverse effect is caused to the battery device that uses the battery pack.

### SUMMARY

In view of the situation above, it is necessary to provide a battery pack and an electrical device to improve the heat dissipation efficiency of the battery.

Some embodiments of this application provide a battery pack. The battery pack includes a housing assembly, a first connecting piece, and a cell assembly. The housing assembly includes a first space. The housing assembly is provided with a first opening and a second opening both communicating with the first space. The first connecting piece is accommodated in the first space. The first connecting piece is provided with a first channel. The first opening communicates to the second opening through the first channel. At least a part of the cell assembly is disposed in the first space. Along a first direction, a projection of the first opening and a projection of the cell assembly are spaced apart from each other, a projection of the second opening and the projection of the cell assembly are spaced apart from each other. The first direction is a stacking direction of battery cells in the cell assembly. The heat of the cell assembly in the battery pack flows in the first channel through external air and is dissipated to an external environment, thereby improving the heat dissipation efficiency of the cell assembly.

Optionally, in some embodiments of this application, the housing assembly includes a first housing. The first housing includes a first wall, a first sidewall, a second sidewall, a third sidewall, and a fourth sidewall. The first wall is connected to the first sidewall, the second sidewall, the third sidewall, and the fourth sidewall to form the first space. The first opening is provided on the first sidewall. The second opening is provided on the second sidewall. The first sidewall and the second sidewall are arranged along the first direction. The third sidewall and the fourth sidewall are arranged along a second direction. The first direction is perpendicular to the second direction.

Optionally, in some embodiments of this application, along a first direction, a projection of the first opening overlaps with a projection of the second opening, thereby shortening the path of the first channel, allowing external air to quickly pass through the first channel to take away the heat of the cell assembly, and improving the heat dissipation efficiency.

Optionally, in some embodiments of this application, when the projection of the first opening overlaps the projection of the second opening along the first direction, the length of the first channel is the shortest and the air volume into and out of the first opening and the second opening is large, thereby further improving heat dissipation.

Optionally, in some embodiments of this application, the first connecting piece includes a first part. The first channel is disposed in the first part. Along the second direction, the first part is located between the third sidewall and the fourth sidewall. Through the thermal connection between the first part and the cell assembly, the heat of the cell assembly is transferred to the first part, and flows in the first channel through the external air and is dissipated to the external environment, thereby improving the heat dissipation efficiency of the cell assembly.

Optionally, in some embodiments of this application, the first connecting piece includes a second part connected to the first part. Along a third direction, the cell assembly is located between the first wall and the second part. The third direction is perpendicular to both the first direction and the second direction. A part of the heat of the cell assembly is conducted to the first wall, and the part of the heat is dissipated to the external environment through the first wall. A part of the heat of the cell assembly is conducted to the second part, and from the second part to the first part. Subsequently, the heat on the first part is taken away by the air that flows in the first channel, thereby improving the heat dissipation.

Optionally, in some embodiments of this application, the cell assembly includes a first cell row. The first cell row includes a plurality of battery cells stacked along the first direction. Each battery cell includes a cell housing, an electrode assembly disposed in the cell housing, and an electrode terminal connected to the electrode assembly and led out of the cell housing.

Optionally, in some embodiments of this application, the cell assembly further includes a second cell row. The first cell row and the second cell row are arranged along the second direction. Along the second direction, the first part is disposed between the first cell row and the second cell row, and the heat of the first cell row and the second cell row is dissipated by the first part.

Optionally, in some embodiments of this application, the first part includes a first surface and a second surface disposed along a second direction. Along the second direction, a projection of the first surface overlaps with a projection of the first cell row, and a projection of the second surface overlaps with a projection of the second cell row. The heat of the first cell row is conducted by the first surface, and the heat of the second cell row is conducted by the second surface, thereby implementing heat dissipation.

Optionally, in some embodiments of this application, along the first direction, a projection of the first cell row is located within a projection of the first surface. A projection of the second cell row is located within a projection of the second surface. In this way, heat can be conducted between each lateral surface of the first cell row and the first surface, and heat can be conducted between each lateral surface of the second cell row and the second surface, thereby further improving the heat dissipation.

Optionally, in some embodiments of this application, a thermal adhesive is disposed between the first part and the first cell row to facilitate rapid conduction of heat to the first connecting piece, thereby further improving the heat dissipation.

Optionally, in some embodiments of this application, a thermal adhesive is disposed between the first part and the second cell row to facilitate rapid conduction of heat to the first connecting piece, thereby further improving the heat dissipation.

Optionally, in some embodiments of this application, the first connecting piece further includes a third part. The third part is connected to the first part. Along the third direction, the first cell row is located between the second part and the first wall. The second cell row is located between the third part and the first wall. A part of the heat of the second cell row is conducted to the first wall, and the part of the heat is dissipated to the external environment through the first wall. A part of the heat of the second cell row is conducted to the third part, and from the third part to the first part. Subsequently, the heat on the first part is taken away by the air that flows in the first channel, thereby improving the heat dissipation.

Optionally, in some embodiments of this application, the first part is further provided with a second channel. The second channel runs through the first part along the first direction. The first channel and the second channel are spaced apart along the third direction. With the second channel disposed, the first channel and the second channel can work together to dissipate heat for the battery cell, thereby further improving the heat dissipation efficiency.

Optionally, in some embodiments of this application, the battery pack further includes a first electrically conductive piece. The second part is provided with a first notch. The third part is provided with a second notch. One end of the first electrically conductive piece is connected to the first cell row. Another end of the first electrically conductive piece is connected to the second cell row. A part of the first electrically conductive piece passes through the first notch, and another the first electrically conductive piece passes through the second notch.

Optionally, in some embodiments of this application, the battery pack further includes a first insulation piece and a first adapter plate. The first adapter plate is connected to the electrode terminal. The first insulation piece is disposed on one side, facing away from the cell assembly, of the first adapter plate. Along the second direction, a projection of the first adapter plate overlaps with a projection of the first insulation piece, and a projection of the electrode terminal overlaps with the projection of the first insulation piece, thereby providing insulative protection for a first electrically conductive strip and the electrode terminal.

Optionally, in some embodiments of this application, a first thermally conductive layer is disposed between the first adapter plate and the cell housing. Along the first direction, a projection of the electrode terminal overlaps with a projection of the first thermally conductive layer. Through the first thermally conductive layer, the electrode terminal between the cell housing and the first adapter plate is fixed, insulated, and enabled to conduct heat.

Optionally, in some embodiments of this application, a second thermally conductive layer is disposed between the first insulation piece and the first adapter plate. Along the first direction, a projection of the electrode terminal overlaps with a projection of the second thermally conductive layer. Through the second thermally conductive layer, a welding portion, the first electrically conductive piece, and a first electrically conductive strip are fixed, insulated, and enabled to conduct heat.

Optionally, in some embodiments of this application, the first thermally conductive layer and the second thermally conductive layer are made of the same material. The first thermally conductive layer and the second thermally conductive layer are formed by curing a flowing insulation material that flows in.

Optionally, in some embodiments of this application, the second part is located on one side, facing away from the first adapter plate, of the first insulation piece. A third thermally conductive layer is disposed between the second part and the first insulation piece. The heat is transferred from the second thermally conductive layer to the third thermally conductive layer, and then from the third thermally conductive layer to the first connecting piece. Subsequently, the heat of the first cell row is dissipated by the first connecting piece. The third thermally conductive layer added can improve the efficiency of transferring the heat of the battery cells to the first connecting piece.

An embodiment of this application further provides an electrical device, including the battery pack disclosed in any one of the embodiments described above.

The heat of the cell assembly in the battery pack and the electrical device flows in the first channel through external air and is dissipated to an external environment, thereby improving the heat dissipation efficiency of the cell assembly.

### BRIEF DESCRIPTION OF DRAWINGS

FIG. 1 is a schematic structural diagram of a battery pack according to some embodiments;
FIG. 2 is a schematic structural diagram of a battery pack from another viewing angle according to some embodiments;
FIG. 3 is a schematic exploded view of a battery pack according to some embodiments;
FIG. 4 is a schematic exploded view of a housing assembly according to some embodiments;
FIG. 5 is a cross-sectional schematic view of a housing assembly according to some embodiments;
FIG. 6 is a cross-sectional schematic view of the battery pack shown in FIG. 1 sectioned along an II-II line;
FIG. 7 is a schematic structural diagram of a first cell row and a first adapter plate according to some embodiments;
FIG. 8 is a schematic structural diagram of a battery cell according to some embodiments;
FIG. 9 is a schematic exploded view of a battery cell according to some embodiments;
FIG. 10 is a schematic structural diagram of a battery pack stripped of a housing assembly according to some embodiments;
FIG. 11 is a schematic structural diagram of the battery pack shown in FIG. 10 with a first connecting piece removed;
FIG. 12 is a schematic exploded view of a battery pack stripped of a housing assembly according to some embodiments;
FIG. 13 is a schematic structural diagram of a first insulation piece according to some embodiments;
FIG. 14 is a schematic structural diagram of a second insulation piece according to some embodiments;
FIG. 15 is a cross-sectional schematic view of the battery pack shown in FIG. 1 sectioned along an III-III line;
FIG. 16 is a close-up view of a part IV shown in FIG. 15;
FIG. 17 is a cross-sectional schematic view of a battery pack sectioned along an III-III line according to some other embodiments;
FIG. 18 is a close-up view of a part V shown in FIG. 17;
FIG. 19 is a schematic structural diagram of a first connecting piece according to some embodiments;
FIG. 20 is a schematic structural diagram of a first connecting piece from another viewing angle according to some embodiments; and
FIG. 21 is a schematic structural diagram of an electrical device according to some embodiments.

### List of reference numerals:

battery pack 100
housing assembly 10
first housing 11
first opening 11a
second opening 11b
first wall 111
first sidewall 112
first connecting hole 1121
second sidewall 113
third sidewall 114
fourth sidewall 115
second housing 12
first hole 12a
fixing bulge 12b
first recess 12c
second wall 121
fifth sidewall 122
third opening 122a
sixth sidewall 123
fourth opening 123a
seventh sidewall 124
eighth sidewall 125
third housing 13
bracket 14
sealing element 15
groove 151
first sealing part 15a
second sealing part 15b
third sealing part 15c
cell assembly 20
first cell row 20a
second cell row 20b
battery cell 21
first lateral surface 21a
second lateral surface 21b
third lateral surface 21c
fourth lateral surface 21d
fifth lateral surface 21e
sixth lateral surface 21f
cell housing 211
first part 211a
second part 211b
first shell 2111
second shell 2112
first extension portion 2113
second extension portion 2114
first sealing portion 2115
second sealing portion 2116
electrode assembly212
electrode terminal 213
welding portion 213a
first terminal 213b
second terminal 213c
first thermally conductive piece 22a
second thermally conductive piece 22b
elastic piece 23
first electrically conductive piece 24
second recess 241
first connecting piece 30
first channel 30a
second connecting hole 30b
second channel 30c
first part 31
first surface 311
second surface312
second part 32
first notch 321
third part 33
second notch 331
circuit board 40
first adapter plate 50
hole 51
first communicating hole 511
second communicating hole512
third communicating hole 513
first conducting strip 52
first electrically connecting portion 53
first electrically conductive portion 531
first insulation portion 532
first sampling harness 54
first insulation piece 60
first main body 61
first through-hole 61a
first bump 61b
fifth opening 611
first bulge 612
sixth opening 613
second bulge 614
seventh opening 615
third bulge 616
first thermally conductive layer 101
second thermally conductive layer 102
first side plate 62
second adapter plate 70
second electrically conductive strip 71
second electrically connecting portion 72
second electrically conductive portion 721
second insulation portion 722
second sampling harness 73
second insulation piece 80
second main body 81
second through-hole 81a
second bump 81b
eighth opening811
fourth bulge 812
ninth opening 813
fifth bulge814
tenth opening 815
sixth bulge 816
second side plate 82
first direction X
second direction Y
third direction Z

The following specific embodiments are intended to describe this application in further detail with reference to the drawings.

### DETAILED DESCRIPTION OF EMBODIMENTS

The following describes the technical solutions in some embodiments of this application with reference to the drawings hereof. Evidently, some described embodiments are merely a part of but not all of the embodiments of this application.

A component considered to be "disposed on" or "provided on" another component may be directly positioned on the other component or may be positioned on the other component through an intermediate component in between. A component considered to be "connected to" another component may be directly connected to the other component or may be connected to the other component through an intermediate component.

Understandably, the term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

Unless otherwise defined, when used for describing the number of components, the term "plurality" herein specifically means that there are two or more components.

Unless otherwise defined, all technical and scientific terms used herein bear the same meanings as what is normally understood by a person skilled in the technical field of this application. The terms used in the specification of this application are merely intended to some describe specific embodiments but not to limit this application. The term "and/or" used herein is intended to include any and all combinations of one or more relevant items recited.

Some embodiments of this application provide a battery pack. The battery pack includes a housing assembly, a first connecting piece, and a cell assembly. The housing assembly includes a first space. The housing assembly is provided with a first opening and a second opening both communicating with the first space. The first connecting piece is accommodated in the first space. The first connecting piece is provided with a first channel. The first opening communicates to the second opening through the first channel. At least a part of the cell assembly is disposed in the first space. Along a first direction, a projection of the first opening and a projection of the cell assembly are spaced apart from each other, a projection of the second opening the projection of the cell assembly are spaced apart from each other. The first direction is a stacking direction of battery cells in the cell assembly. The heat of the cell assembly in the battery pack flows in the first channel through external air and is dissipated to an external environment, thereby improving the heat dissipation efficiency of the cell assembly.

The following describes some embodiments of this application in detail with reference to drawings. To the extent that no conflict occurs, some following embodiments and the features in the embodiments may be combined with each other.

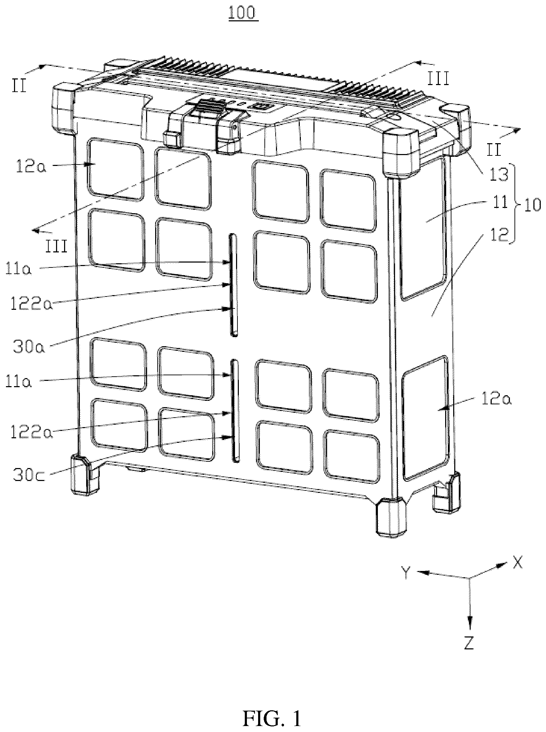

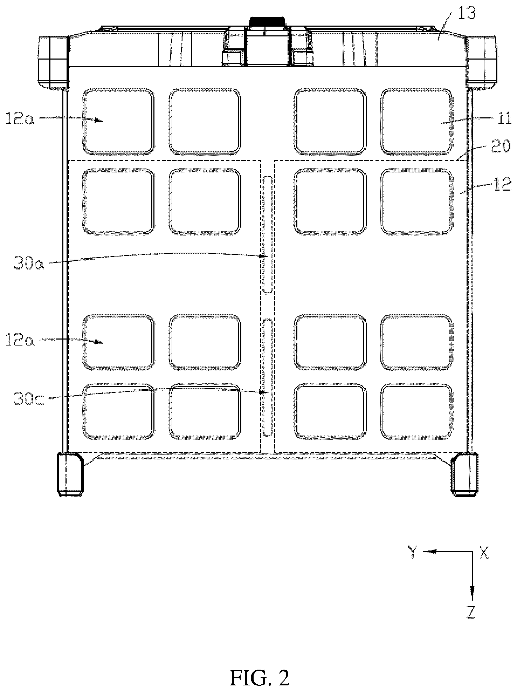

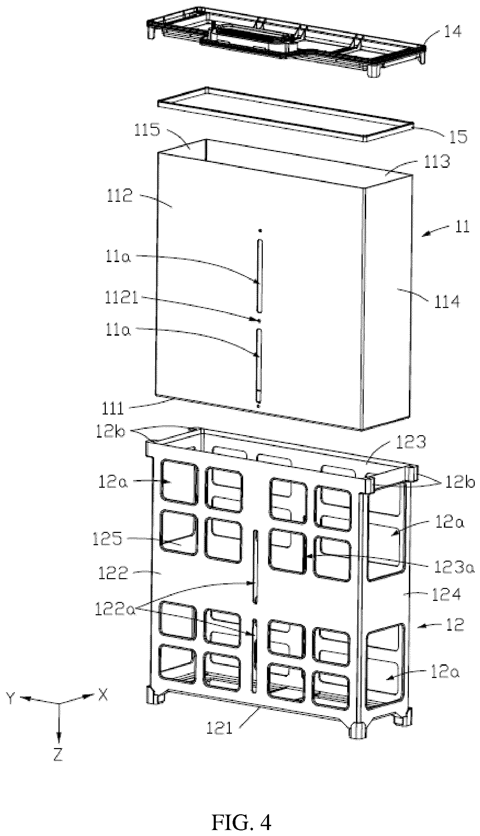

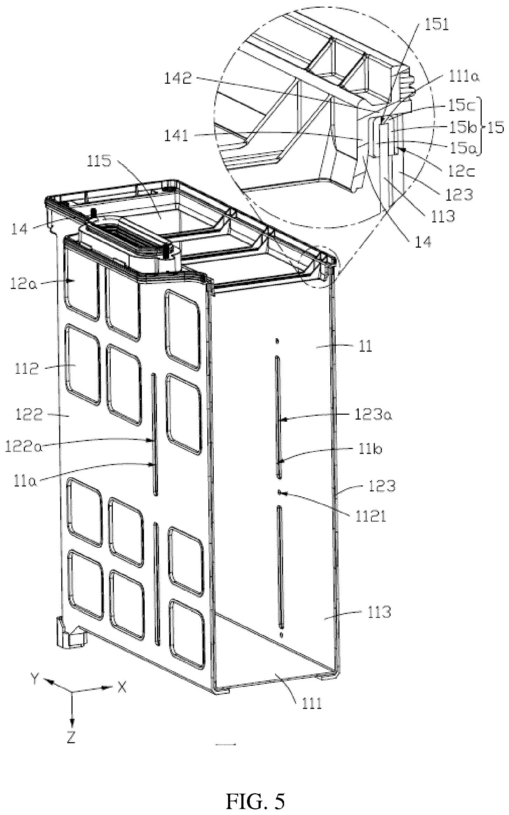

Referring to FIG. 1 to FIG. 5, an embodiment of this application provides a battery pack 100, including a housing assembly 10, a cell assembly 20, and a first connecting piece 30. The housing assembly 10 includes a first space. Both the cell assembly 20 and the first connecting piece 30 are disposed in the first space. The housing assembly 10 is further provided with a first opening 11a and a second opening 11b, the first opening 11a and a second opening 11b are communicate to the first space. The first connecting piece 30 is provided with a first channel 30a. One end of the first channel 30a is connected to the first opening 11a. Another end of the first channel is connected to the second opening 11b. A part of the surfaces of the cell assembly 20 are facing toward the first connecting piece 30, and can dissipate heat through the first connecting piece 30. External air can enter the first channel 30a from the first opening 11a, and be expelled from the second opening 11b; or, external air can enter the first channel 30a from the second opening 11b, and be expelled from the first opening 11a. A part of the heat of the cell assembly 20 flows in the first channel 30a through the external air, and is dissipated to the external environment. The remaining surfaces are facing toward the inner wall of the housing assembly 10. A part of the heat is dissipated to the external environment through the inner wall of the housing assembly 10. In this way, each surface of the cell assembly 20 can exchange heat with the external environment, thereby improving the heat dissipation efficiency of the cell assembly 20.

In an embodiment, the battery pack 100 may utilize external air to carry away the heat of the cell assembly 20 through the flow of air. In an embodiment, when the battery pack 100 is in a static state, for example, when the battery pack 100 is being charged, the heat may be dissipated by utilizing natural air or external air cooling equipment. In an embodiment, the battery pack 100 may be applied to a device that is in a dynamic state when in use, such as an unmanned aerial vehicle, an electric power-assisted vehicle, in which rapid heat dissipation of the battery pack 100 can be implemented due to fast air flow when the device is moving.

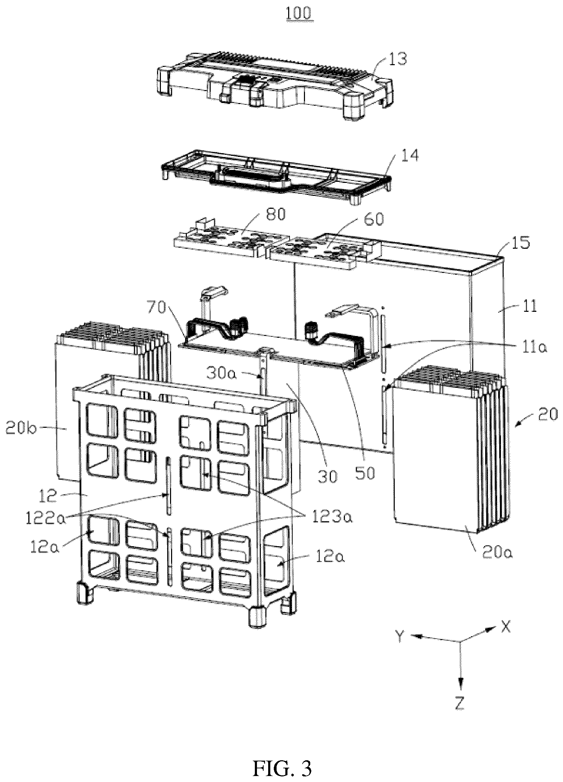

Referring to FIG. 3, FIG. 4, FIG. 5, and FIG. 6, in an embodiment, the housing assembly 10 includes a first housing 11. The first housing 11 includes a first space. The first housing 11 includes a first wall 111, a first sidewall 112, a second sidewall 113, a third sidewall 114, and a fourth sidewall 115. Both the first sidewall 112 and the second sidewall 113 are connected to the first wall 111. The first sidewall 112 and the second sidewall 113 are arranged along a direction. Both the third sidewall 114 and the fourth sidewall 115 are connected to the first wall 111. The third sidewall 114 and the fourth sidewall 115 are arranged along a direction. The third sidewall 114 is further connected to the first sidewall 112 and the second sidewall 113, and the fourth sidewall 115 is further connected to the third sidewall 114 and the fourth sidewall 115, so as to form a first space.

In an embodiment, the first housing 11 and the first connecting piece 30 each include a heat transfer material to improve heat dissipation performance. Optionally, the first housing 11 and the first connecting piece 30 each include a metallic heat-transfer material and a heat-transfer insulation material. The insulation material may cover the outer surface of the metallic heat-transfer material. Optionally, the metallic heat-transfer material of the first housing 11 and the first connecting piece 30 includes aluminum. Optionally, the first housing 11 and the first connecting piece 30 are made of a metal material.

To describe the structure of the battery pack 100 more clearly, the structure of the battery pack 100 will be described by using X, Y, and Z coordinate axes. The X-axis, the Y-axis, and Z-axis are perpendicular to one other. It is defined that the X direction is a first direction, the Y direction is a second direction, and the Z direction is a third direction. The first direction X is a direction in which the first sidewall 112 and the second sidewall 113 are arranged. The second direction Y is a direction in which the third sidewall 114 and the fourth sidewall 115 are arranged. The third direction Z is a direction perpendicular to the surface of the first wall 111. The first direction X is perpendicular to both the second direction Y and the third direction Z.

In an embodiment, the first opening 11a runs through the first sidewall 112, and the second opening 11b runs through the second sidewall 113. In an embodiment, along the first direction X, the projection of the first opening 11a overlaps with the projection of the second opening 11b. Optionally, along the first direction X, the projection of the first opening 11a partially overlaps with the projection of the second opening 11b. Optionally, along the first direction X, the projection of the first opening 11a fully overlaps the projection of the second opening 11b. The first sidewall 112 is connected to the first connecting piece 30. The second sidewall 113 is connected to the first connecting piece 30. In this way, one end of the first channel 30a is connected to the first opening 11a, and another end of the first channel is connected to the second opening 11b. When the projection of the first opening 11a overlaps with the projection of the second opening 11b along the first direction X, the length of the first channel 30a is the shortest and the air volume into and out of the first opening 11a and the second opening 11b is large, thereby further improving heat dissipation. When the battery pack 100 moves along a direction opposite to the first direction X or the airflow direction of the external air cooling device is the first direction X, the first opening 11a is an air inlet and the second opening 11b is an air outlet. Air enters from the first opening 11a, passes through the first channel 30a, and is expelled from the second opening 11b, thereby improving the heat dissipation. Understandably, when the battery pack 100 moves along the first direction X or the airflow direction of the external air cooling device is opposite to the first direction X, the second opening 11b is an air inlet and the first opening 11a is an air outlet. In another embodiment, the first opening 11a is provided on the third sidewall 114, and the second opening 11b is provided on the fourth sidewall 115.

In another embodiment (not shown in the drawing), the first opening 11a runs through the first wall 111, and the second opening 11b runs through the first sidewall 112 and the second sidewall 113. One end of the first channel 30a is connected to the first opening 11a, and another end of the first channel 30a is connected to the second opening 11b on the first sidewall 112 and the second opening 11b on the second sidewall 113. Air can enter from the first opening 11a on the first wall 111, pass through the first channel 30a, and be expelled from the second opening 11b on the first sidewall 112 and the second opening 11b on the second sidewall 113. By increasing the air outlets, the air volume is increased, and the heat dissipation is improved. Alternatively, the air can enter from one second opening 11b, that is, from either the second opening 11b on the first sidewall 112 or the second opening 11b on the second sidewall 113, and be expelled from the other second opening 11b and the first opening 11a, thereby improving the heat dissipation.

In an embodiment, the first sidewall 112 and the second sidewall 113 each are provided with a plurality of first connecting holes 1121. Both lateral surfaces of the first connecting piece 30 arranged along the first direction X are provided with a plurality of second connecting holes 30b. Fasteners (not shown in the drawing), such as screws, pass through the first connecting holes 1121 and the second connecting holes 30b to fixedly connect the first connecting piece 30 to the first sidewall 112 and the second sidewall 113.

In an embodiment, the housing assembly 10 further includes a second housing 12. The second housing 12 includes a second space. The first housing 11 is disposed in the second housing 12. The second housing 12 is configured to improve the impact resistance of the battery pack 100 and reduce the risk that the first housing 11 is deformed by impact and pierces the cell assembly 20. Optionally, the second housing 12 includes a plastic housing. Optionally, the second housing 12 is formed by an injection molding process.

In an embodiment, the second housing 12 includes a second wall 121, a fifth sidewall 122, a sixth sidewall 123, a seventh sidewall 124, and an eighth sidewall 125. The fifth sidewall 122 and the sixth sidewall 123 are both connected to the second wall 121. The fifth sidewall 122 and the sixth sidewall 123 are arranged along the first direction X. The seventh sidewall 124 and the eighth sidewall 125 are both connected to the second wall 121. The seventh sidewall 124 and the eighth sidewall 125 are arranged along the second direction Y. The seventh sidewall 124 is further connected to the fifth sidewall 122 and the sixth sidewall 123, and the eighth sidewall 125 is further connected to the fifth sidewall 122 and the sixth sidewall 123, so as to form a second space. A first hole 12a is provided on at least one of the second wall 121, the fifth sidewall 122, the sixth sidewall 123, the seventh sidewall 124, and the eighth sidewall 125. The first housing 11 is exposed from the first hole 12a to facilitate heat dissipation. Optionally, the first hole 12a is provided on all of the second wall 121, the fifth sidewall 122, the sixth sidewall 123, the seventh sidewall 124, and the eighth sidewall 125 to improve heat dissipation. In addition, the plurality of first holes 12a make the second housing 12 assume a mesh-like structure, thereby reducing the material consumption of the second housing 12, and in turn, reducing the weight of the second housing 12, and making the battery pack 100 lighter. Understandably, the second housing 12 itself can dissipate heat for the first housing 11.

In an embodiment, the fifth sidewall 122 is provided with a third opening 122a, and the sixth sidewall 123 is provided with a fourth opening 123a. Along the first direction X, the projections of the third opening 122a and the fourth opening 123a overlap with the projection of the first channel 30a. Along the first direction X, the projection of the first opening 11a overlaps with the projection of the third opening 122a. Optionally, the projection of the first opening 11a overlaps with the projection of the third opening 122a, thereby increasing the amount of air that flows in and out. Along the first direction X, the projection of the second opening 11b overlaps with the projection of the fourth opening 123a. Optionally, the projection of the second opening 11b overlaps with the projection of the fourth opening 123a, thereby increasing the amount of the air that flows in and out. In a case that the battery pack 100 moves along a direction opposite to the first direction X or the airflow direction of the external air cooling device is the first direction X, the air enters the first channel 30a through the third opening 122a and the first opening 11a, and is expelled through the second opening 11b and the fourth opening 123a.

In an embodiment, the first housing 11 is in clearance fit or in interference fit with the second housing 12. In this way, the outer surface of the first housing 11 closely fits the inner surface of the second housing 12, thereby making it convenient to fix the first housing 11.

In an embodiment, the housing assembly 10 further includes a third housing 13 and a bracket 14. The bracket 14 connects the first housing 11 and the second housing 12, and the third housing 13 is connected to the bracket 14, so that the first housing 11 is enclosed in the second housing 12. A fixing bulge 12b is disposed at a junction between the seventh sidewall 124 and the fifth sidewall 122. A fixing bulge 12b is provided at a junction between the seventh sidewall 124 and the sixth sidewall 123. A fixing bulge 12b is provided at a junction between the eighth sidewall 125 and the fifth sidewall 122. A fixing bulge 12b is provided at the junction between the eighth sidewall 125 and the sixth sidewall 123. The bracket 14 is connected to the first sidewall 112, the second sidewall 113, the third sidewall 114, and the fourth sidewall 115. The bracket 14 and the first wall 111 are arranged along the third direction Z. The bracket 14 is fixedly connected to the fixing bulge 12b by a fastener, so as to constrain the first housing 11 within the second housing 12. The third housing 13 is fixedly connected to one side, facing away from the second housing 12, of the bracket 14. When the second housing 12 and/or the third housing 13 need to be replaced, the second housing 12 and/or the third housing 13 can be disassembled and replaced by loosening the fasteners.

In an embodiment, the battery pack 100 further includes a circuit board 40. The circuit board 40 is disposed in the third housing 13. The circuit board 40 is electrically connected to the cell assembly 20. Optionally, the circuit board 40 includes a battery management system (BMS) assembly. Specifically, the BMS assembly includes a plurality of electronic components. The plurality of electronic components can implement functions such as dada collection, control, protection, communication, state-of-charge (SoC) calculation, signal transmission, and power transmission for the battery.

In an embodiment, the housing assembly 10 further includes a sealing element 15. The sealing element 15 is connected to a side, facing away from the first wall 111, of the first sidewall 112, the second sidewall 113, the third sidewall 114, and the fourth sidewall 115, separately. When the bracket 14 is fixedly connected to the second housing 12, the bracket 14 presses against the sealing element 15 along the third direction Z. Optionally, the sealing element 15 is a closed-loop structure. The sealing element 15 is provided with a groove 151. A side, facing away from the first wall 111, of the first sidewall 112, the second sidewall 113, the third sidewall 114, and the fourth sidewall 115, separately, is disposed in the groove 151. Along the first direction X, the projections of the first sidewall 112 overlap with the projection of the sealing element 15, the second sidewall 113 overlap with the projection of the sealing element 15. Along the second direction Y, the projections of the third sidewall 114 overlap with the projection of the sealing element 15, the fourth sidewall 115 overlap with the projection of the sealing element 15.

In an embodiment, the sealing element 15 includes a first sealing part 15a, a second sealing part 15b, and a third sealing part 15c. The first sealing part 15a is disposed between the inner surface of the first housing 11 and the bracket 14. The second sealing part 15b is disposed between the outer surface of the first housing 11 and the inner surface of the second housing 12. The third sealing part 15c connects the first sealing part 15a and the second sealing part 15b. The third sealing part 15c is located between the bracket 14 and the first housing 11. The bracket 14 can contact and be connected to the third sealing part 15c.

In an embodiment, a first adhesive layer (not shown in the drawing) is disposed between the first sealing part 15a and the inner surface of the first housing 11, and a first adhesive layer is disposed between the second sealing part 15b and the outer surface of the first housing 11. The sealing element 15 is bonded and fixed to the first housing 11 by the first adhesive layer. Optionally, the first adhesive layer includes a sealing adhesive. A second adhesive layer (not shown in the drawing) is disposed between the first sealing part 15a and the bracket 14. A second adhesive layer is disposed between the second sealing part 15b and the inner surface of the second housing 12. A second adhesive layer is disposed between the third sealing part 15c and the bracket 14. Optionally, the second adhesive layer includes a sealing adhesive. The second adhesive layer disposed can strengthen the connection between the bracket 14 and the sealing element 15, and the connection between the second housing 12 and the sealing element, and reduce the risk that impurities such as moisture enter the first housing 11 and cause a short circuit of the battery.

In an embodiment, a first recess 12c is disposed at one end of the fifth sidewall 122, the sixth sidewall 123, the seventh sidewall 124, and the eighth sidewall 125, separately, the end being an end facing away from the second wall 121. The second sealing part 15b is disposed in the first recess 12c. With the second sealing part 15b disposed in the first recess 12c, the extension path of the clearance between the second sealing part 15b and the sidewall of the second housing 12 is increased, the moisture entering the first housing 11 is reduced, and the risk of a short circuit of the battery is further reduced. Using the sixth sidewall 123 as an example, one end of the sixth sidewall 123 is recessed along the first direction X to form the first recess 12c, the end of the sixth sidewall 123 being an end facing away from the second wall 121. Along the second direction Y, the projection of the second sealing part 15b overlaps with the projection of the first recess 12c. Optionally, the projection of the second sealing part 15b is located within the projection of the first recess 12c. Understandably, the depth of the first recess 12c along the first direction X may be an added extension path.

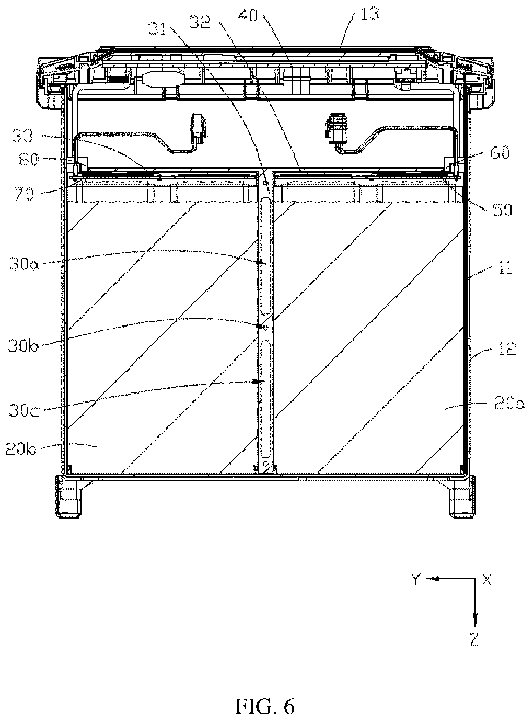

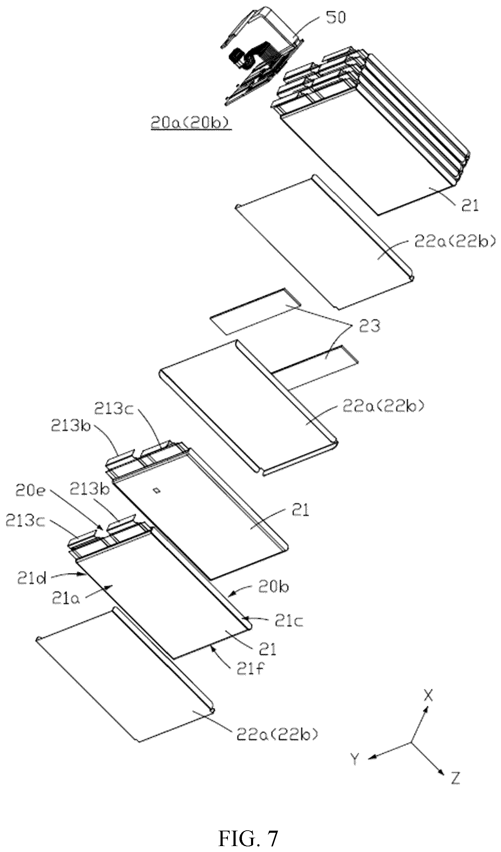

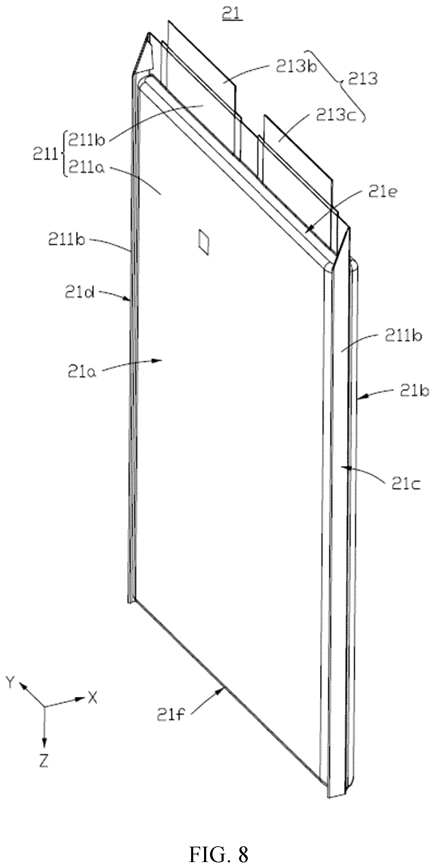

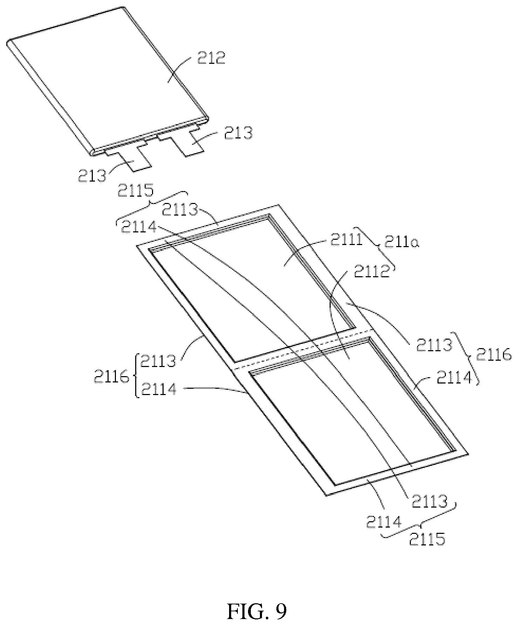

Referring to FIG. 6 to FIG. 10, in an embodiment, along the first direction X, the first opening 11a and the second opening 11b are provided on two sides of the cell assembly 20 respectively. The cell assembly 20 includes a first cell row 20a. The first cell row 20a is disposed between the first sidewall 112 and the second sidewall 113. The first cell row 20a is disposed between the third sidewall 114 and a part of the first connecting piece 30. The first cell row 20a is also disposed between the first wall 111 and a part of the first connecting piece 30. The first cell row 20a includes a plurality of battery cells 21 stacked along the first direction X. The battery cell 21 includes a cell housing 211, an electrode assembly 212 disposed in the cell housing 211, and an electrode terminal 213 connected to the electrode assembly 212 and led out from the cell housing 211. In an embodiment, the cell housing 211 includes a first part 211a and a second part 211b. The first part 211a accommodates the electrode assembly 212, and the second part 211b is connected to the first part 211a. The electrode terminal 213 extends out from the second part 211b.

In an embodiment, the cell housing 211 includes a first shell 2111 and a second shell 2112. The first shell 2111 is connected to the second shell 2112. A recess is disposed in at least one of the first shell 2111 or the second shell 2112, and is configured to accommodate the electrode assembly 212. The first shell 2111 and the second shell 2112 may be folded along a junction in between (indicated by the dashed line). In this way, the first shell 2111 and the second shell 2112 coincide to form a first part 211a, so as to enclose the electrode assembly 212. The rim of the first shell 2111 extends outward to form a plurality of first extension portions 2113. The rim of the second shell 2112 extends outward to form a plurality of second extension portions 2114. After the first shell 2111 and the second shell 2112 are folded along the junction in between, the first extension portion 2113 and the second extension portion 2114 coincide and are connected hermetically to form a second part 211b. The second part 211b includes a first sealing portion 2115 and a second sealing portion 2116. The first sealing portion 2115 is disposed opposite to the junction. The electrode terminal 213 extends out of the first part 211a from the first sealing portion 2115. Optionally, the second part 211b includes two second sealing portions 2116. The two second sealing portions 2116 are arranged along the second direction Y. Optionally, the second part 211b includes one first sealing portion 2115. The battery cell 21 includes two electrode terminals 213. The two electrode terminals 213 extend out of the cell housing 211 from the first sealing portion 2115. In some other embodiments, the first shell 2111 is separate from the second shell 2112. The second part 211b includes two first sealing portions 2115. The two first sealing portions 2115 are arranged along the third direction Z. The battery cell 21 includes two electrode terminals 213. One of the electrode terminals 213 extends out of the cell housing 211 from one of the first sealing portions 2115, and the other electrode terminal 213 extends out of the cell housing 211 from the other first sealing portion 2115. The two electrode terminals 213 are arranged along the third direction Z.

In an embodiment, the electrode assembly 212 includes a jelly-roll structure formed by winding a positive electrode plate, a negative electrode plate, and a separator. In some other embodiments, the electrode assembly 212 may be a stacked structure instead, in which the positive electrode plate, the separator, and the negative electrode plate are stacked in sequence to form an electrode assembly unit, and then a plurality of electrode assembly units are stacked to form an electrode assembly 212. Optionally, the cell housing 211 includes an aluminum laminated film. Optionally, the battery cell 21 may be a pouch cell.

In an embodiment, the electrode terminal 213 includes a welding portion 213a extending out of the cell housing 211. The welding portion 213a is formed by bending the electrode terminal 213. In an embodiment, the electrode terminals 213 include a first terminal 213b and a second terminal 213c. The polarity of the first terminal 213b is opposite to the polarity of the second terminal 213c. One of the first terminal 213b or the second terminal 213c is a positive terminal, and the other is a negative terminal. Along the third direction Z, a projection of the welding portion 213a of the first terminal 213b of a battery cell 21 at least partially overlaps with a projection of the welding portion 213a of the second terminal 213c of an adjacent battery cell 21. The first terminal 213b and the second terminal 213c of adjacent battery cells 21 are bent toward each other, and the welding portion 213a of the first terminal 213b and the welding portion 213a of the second terminal 213c are connected to each other in a stacked manner. The adjacent battery cells 21 are connected in series. Interconnecting the welding portions 213a of the adjacent battery cells 21 can reduce the processing steps. In some other embodiments, adjacent battery cells 21 may be connected in parallel.

In an embodiment, using a single battery cell 21 as an example, the battery cell 21 includes a first lateral surface 21a, a second lateral surface 21b, a third lateral surface 21c, a fourth lateral surface 21d, a fifth lateral surface 21e, and a sixth lateral surface 21f. The first lateral surface 21a and the second lateral surface 21b are arranged along the first direction X. The third lateral surface 21c and the fourth lateral surface 21d are arranged along the second direction Y. The fifth lateral surface 21e and the sixth lateral surface 21f are arranged along the third direction Z. The electrode terminal 213 extends out from the fifth lateral surface 21e. In an embodiment, the first lateral surface 21a is disposed toward the first sidewall 112. The second lateral surface 21b is disposed toward the second sidewall 113. The third lateral surface 21c is disposed toward the third sidewall 114. The fourth lateral surface 21d is disposed toward a part of the first connecting piece 30. The fifth lateral surface 21e is disposed toward another part of the first connecting piece 30. The sixth lateral surface 21f is disposed toward the first wall 111. The first lateral surface 21a, the second lateral surface 21b, the third lateral surface 21c, the fourth lateral surface 21d, the fifth lateral surface 21e, and the sixth lateral surface 21f of the battery cell 21 are all allowed to transfer heat to the external environment, thereby improving the heat dissipation of the cell assembly 20, and reducing the temperature of the battery pack 100. Understandably, the above method is also applicable to a scenario of a plurality of battery cells 21.

In an embodiment, the first cell row 20a further includes a first thermally conductive piece 22a. Each battery cell 21 is thermally connected to at least one first thermally conductive piece 22a. The first thermally conductive piece 22a is thermally connected to the first housing 11 and the first connecting piece 30. In this way, the heat of the battery cell 21 is transferred to the first housing 11 and the first connecting piece 30 through the first thermally conductive piece 22a, and then the heat of the battery cell 21 is dissipated through the first housing 11 and the first connecting piece 30. The first thermally conductive piece 22a is connected to the first lateral surface 21a or the second lateral surface 21b, and is bent and extended to the third lateral surface 21c, the fourth lateral surface 21d, and the sixth lateral surface 21f. The first thermally conductive piece 22a located on the first lateral surface 21a is thermally connected to the first sidewall 112. The first thermally conductive piece 22a located on the second lateral surface 21b is thermally connected to the second sidewall 113. The first thermally conductive piece 22a located on the third lateral surface 21c is thermally connected to the third sidewall 114. The first thermally conductive piece 22a located on the fourth lateral surface 21d is thermally connected to the surface of the first connecting piece 30. The first thermally conductive piece 22a located on the sixth lateral surface 21f is thermally connected to the surface of the first wall 111. The heat of the battery cell 21 is transferred to the first connecting piece 30 and the first housing 11 through the first thermally conductive piece 22a, thereby improving the heat dissipation effect of the battery cell 21. In another embodiment, the first thermally conductive piece 22a does not need to extend to the fourth lateral surface 21d, and the fourth lateral surface 21d is directly thermally connected to the first connecting piece 30. The thermal connection may be heat-transfer connection implemented by a thermal adhesive or the like. Alternatively, the thermal connection may be direct-contact connection implemented between two structural components. For example, the first thermally conductive piece 22a is in contact with and connected to the first housing 11 and the first connecting piece 30. Optionally, the first thermally conductive piece 22a includes an aluminum sheet.

In an embodiment, an elastic piece 23 is further disposed between adjacent first thermally conductive pieces 22a. When the battery cell 21 expands, the elastic piece 23 can be compressed to provide an expansion space for the battery cell 21. Optionally, the elastic piece 23 includes foam.

In an embodiment, the cell assembly 20 further includes a second cell row 20b. The first cell row 20a and the second cell row 20b are arranged along the second direction Y. Along the second direction Y, the first connecting piece 30 is disposed between the first cell row 20a and the second cell row 20b. The second cell row 20b is disposed between a part of the first connecting piece 30 and the fourth sidewall 115. The second cell row 20b is disposed between the first sidewall 112 and the second sidewall 113. The second cell row 20b is also disposed between the first wall 111 and a part of the first connecting piece 30. In an embodiment, the first connecting piece 30 is thermally connected to the first cell row 20a and the second cell row 20b, and can transfer the heat of the first cell row 20a and the second cell row 20b to the first connecting piece 30 simultaneously, and quickly dissipate heat through the first channel 30a.

In an embodiment, the battery cells 21 of the second cell row 20b assume the same structure as the battery cells 21 of the first cell row 20a. The second cell row 20b includes a plurality of battery cells 21 stacked along the first direction X. Each battery cell 21 is in contact with and connected to the first connecting piece 30 and the first housing 11.

In an embodiment, the second cell row 20b further includes a second thermally conductive piece 22b. The second thermally conductive piece 22b assumes basically the same structure as the first thermally conductive piece 22a. Optionally, the first connecting piece 30 is connected to the first thermally conductive piece 22a, the first connecting piece 30 is connected to the second thermally conductive piece 22b, and the first connecting piece 30 is located between the first thermally conductive piece 22a and the second thermally conductive piece 22b, so as to improve the heat dissipation of the cell assembly 20.

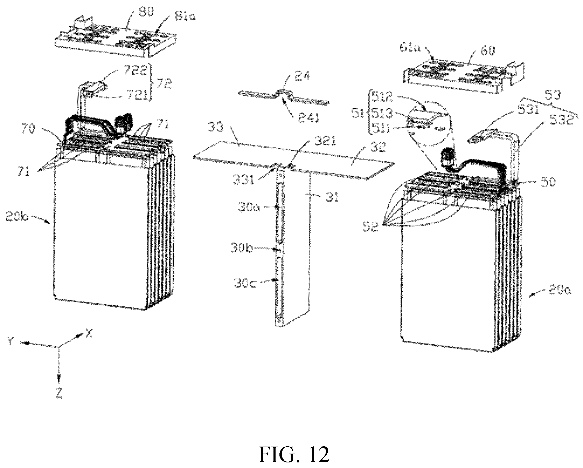

In an embodiment, referring to FIG. 12, in an embodiment, the battery pack 100 further includes a first electrically conductive piece 24. One end of the first electrically conductive piece 24 is connected to the first cell row 20a. Another end of the first electrically conductive piece is connected to the second cell row 20b. Optionally, one end of the first electrically conductive piece 24 is connected to the first terminal 213b of the battery cell 21 in the first cell row 20a, and another end of the first electrically conductive piece is connected to the second terminal 213c of the battery cell 21 in the second cell row 20b, thereby implementing series connection between the first cell row 20a and the first cell row 20a. Optionally, one end of the first electrically conductive piece 24 is connected to the first terminal 213b of the battery cell 21 in the first cell row 20a, and another end is connected to the first terminal 213b of the battery cell 21 in the second cell row 20b, thereby implementing parallel connection between the first cell row 20a and the first cell row 20a. The first electrically conductive piece 24 is provided with a second recess 241, and the first connecting piece 30 is partially disposed in the second recess 241.

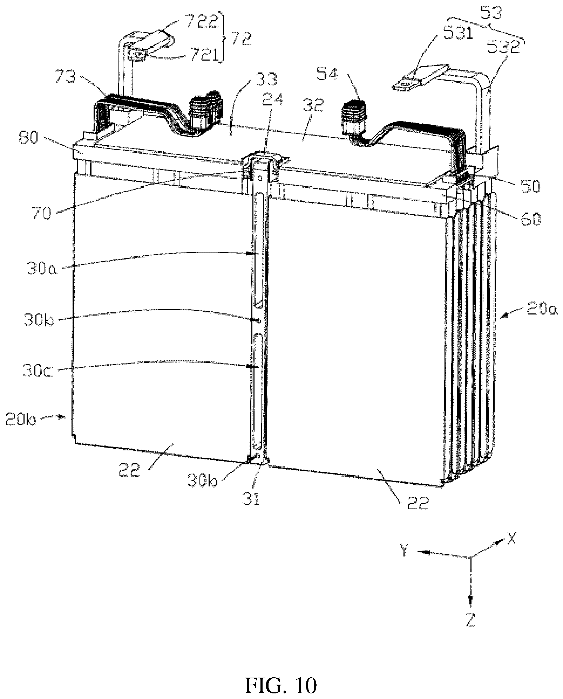

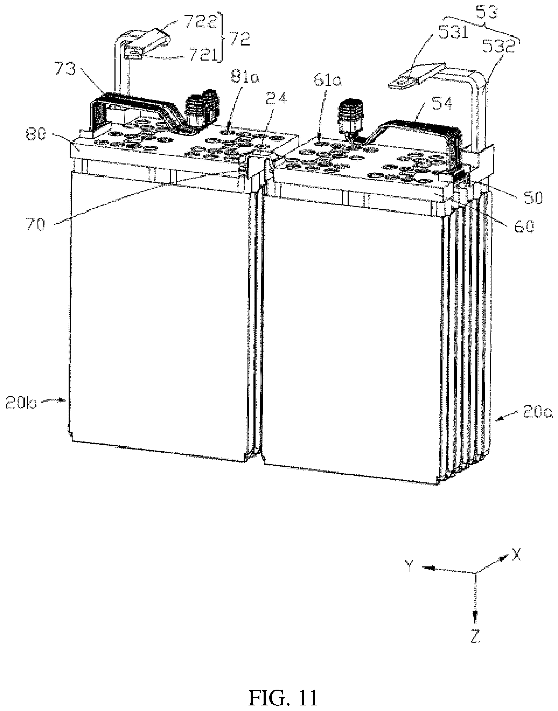

Referring to FIG. 10, FIG. 11, and FIG. 12, in an embodiment, the battery pack 100 further includes a first adapter plate 50. The first adapter plate 50 is connected to the first cell row 20a. The first adapter plate 50 is provided with a plurality of groups of holes 51. Each group of holes 51 includes a first communicating hole 511 and a second communicating hole 512 arranged along the first direction X. The first communicating hole 511 and the second communicating hole 512 extend along the second direction Y. The first terminal 213b of one of two adjacent battery cells 21 passes through the first communicating hole 511, and the second terminal 213c of the other battery cell 21 passes through the second communicating hole 512. The welding portion 213a of the first terminal 213b and the welding portion 213a of the second terminal 213c are stacked together, and then connected to the first adapter plate 50.

In an embodiment, the first adapter plate 50 includes a circuit board. Optionally, the first adapter plate 50 includes a printed circuit board (PCB, Printed Circuit Board). The first adapter plate 50 is populated with a plurality of traces (not shown in the drawing). Optionally, the first adapter plate 50 may be a flexible circuit board (FPC, Flexible Printed Circuit).

Optionally, a plurality of first electrically conductive strips 52 are disposed on a side of the first adapter plate 50, the side of the first adapter plate 50 being a side facing away from the battery cell 21. The first electrically conductive strip 52 is disposed between the first communicating hole 511 and the second communicating hole 512. The first terminal 213b of one of two adjacent battery cells 21 passes through the first communicating hole 511, and the second terminal 213c of the other battery cell 21 passes through the second communicating hole 512. The welding portion 213a of the first terminal 213b and the welding portion 213a of the second terminal 213c are stacked together, and then welded to the first electrically conductive strip 52. The welding includes laser welding, ultrasonic welding, and the like. In some other embodiments, the welding portion 213a may be connected to the first electrically conductive strip 52 by other means such as conductive adhesive.

Optionally, each group of holes 51 further includes a third communicating hole 513. When viewed along the third direction Z, the third communicating hole 513 is located between adjacent first electrically conductive strips 52.

In an embodiment, the battery pack 100 further includes a first electrical connecting portion 53 connected to the first adapter plate 50. The first electrical connecting portion 53 includes a first electrically conductive portion 531 and a first insulation portion 532. The first insulation portion 532 is sleeved on the first electrically conductive portion 531. Both ends of the first electrically conductive portion 531 extend out of the first insulation portion 532. One end of the first electrically conductive portion 531 is connected to the first electrically conductive strip 52, and another end is connected to the circuit board 40. In an embodiment, the first electrically conductive portion 531 and the first electrically conductive strip 52 are a one-piece structure. In an embodiment, the first adapter plate 50 is further provided with a first sampling harness 54. The first sampling harness 54 is connected to the circuit board 40. The first sampling harness 54 can collect information such as current, voltage, and temperature of the battery cell 21.

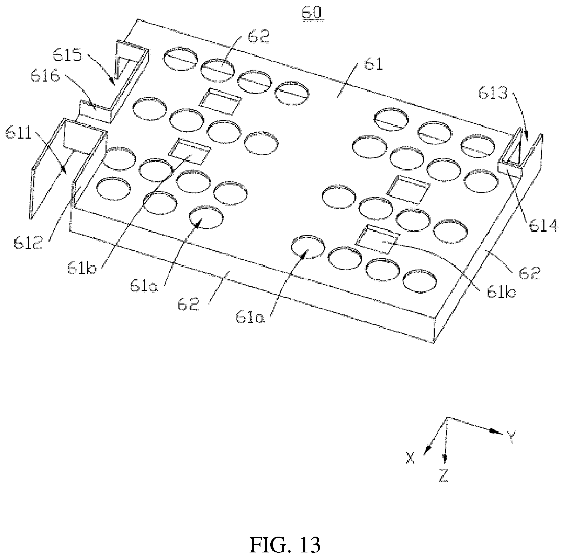

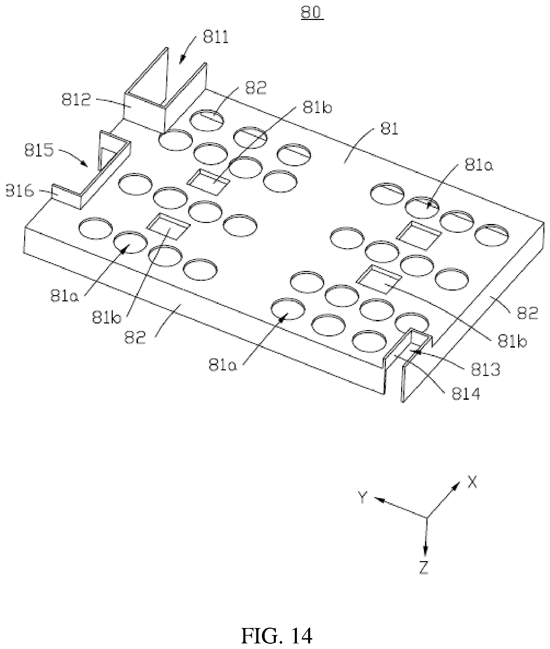

Referring to FIG. 12, FIG. 13, and FIG. 14, in an embodiment, the battery pack 100 further includes a first insulation piece 60. The first insulation piece 60 is disposed on one side of the first electrically conductive strip 52, the side the first electrically conductive strip 52 being a side facing away from the battery cell 21, and is configured to provide insulative protection for the first electrically conductive strip 52 and the electrode terminal 213. The first insulation piece 60 includes a first main body 61 and a first side plate 62 extending from the edge of the first main body 61. Along the third direction Z, a projection of the first adapter plate 50 overlaps with a projection of the first main body 61. Optionally, the projection of the first adapter plate 50 is located within the projection of the first main body 61. In this way, the first main body 61 covers the first electrically conductive strip 52 and the electrode terminal 213. Along the first direction X or the second direction Y, the projection of the first side plate 62 overlaps with the projection of the first adapter plate 50. Further, along the first direction X or the second direction Y, the projection of the first electrically conductive strip 52 is located within the projection of the first side plate 62.

In an embodiment, the first main body 61 is provided with a fifth opening 611. The fifth opening 611 runs through the surface of the first main body 61 along the third direction Z. The first electrical connecting portion 53 passes through the fifth opening 611, and then extends to one side of the first main body 61, the one side of the first main body 61being a side facing away from the first adapter plate 50. Optionally, the first main body 61 is provided with a first bulge 612. The first bulge 612 is disposed at the edge of the fifth opening 611. Through the first bulge 612, the first electrical connecting portion 53 is constrained. Along the second direction Y, the projection of the first electrically conductive portion 531 is located within the projection of the first bulge 612. The first bulge 612 insulates one end of the first electrically conductive portion 531, the end extending out of the first insulation portion 532, thereby reducing the risk of a short circuit of the part that extends out of the first insulation portion 532 on the first electrically conductive portion 531. Optionally, along the second direction Y, the projection of the first insulation portion 532 overlaps with the projection of the first bulge 612, thereby further improving the insulation of the extension-out part of the first electrically conductive portion 531.

In an embodiment, the first main body 61 is provided with a sixth opening 613. The sixth opening 613 runs through the surface of the first main body 61 along the third direction Z. The first electrically conductive piece 24 passes through the sixth opening 613, and is connected to the first electrically conductive strip 52. Optionally, the first main body 61 is provided with a second bulge 614. The second bulge 614 is located at the edge of the sixth opening 613. Along the second direction Y, the projection of the first electrically conductive piece 24 overlaps with the projection of the second bulge 614. Through the second bulge 614, the first electrically conductive piece 24 is constrained and insulated. Along the second direction Y, a part of the structure of the second bulge 614 is located between the first electrically conductive piece 24 and the first connecting piece 30, thereby reducing the risk of a short circuit between the first electrically conductive piece 24 and the first connecting piece 30.

In an embodiment, the first main body 61 is provided with a seventh opening 615. The seventh opening 615 runs through the surface of the first main body 61. A third bulge 616 is disposed at the edge of the seventh opening 615. The first sampling harness 54 passes through the first main body 61 through the seventh opening 615, and is connected to the circuit board 40.

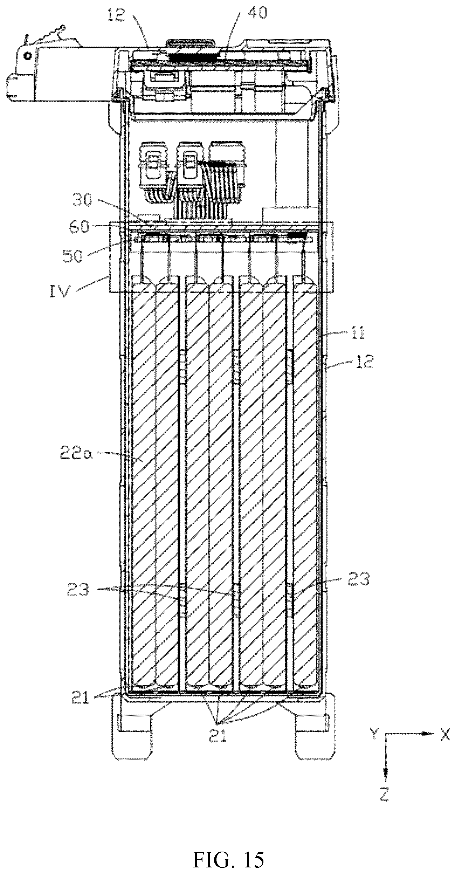

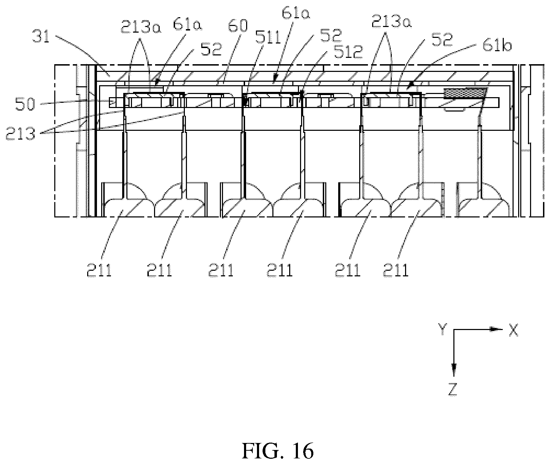

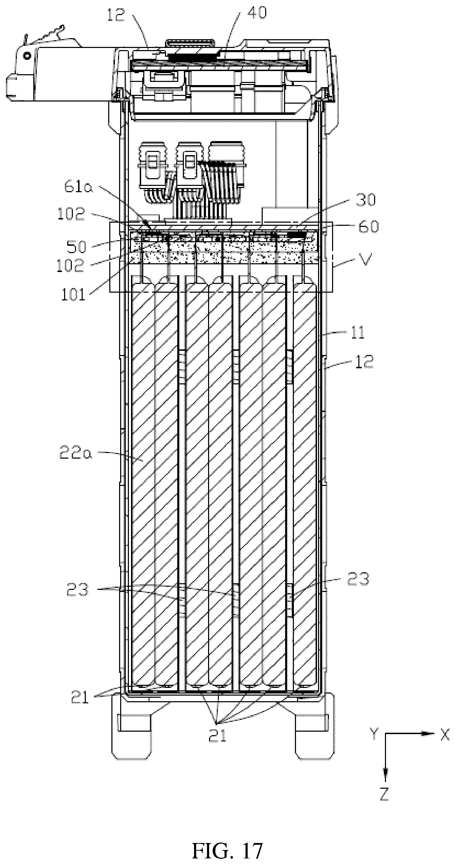

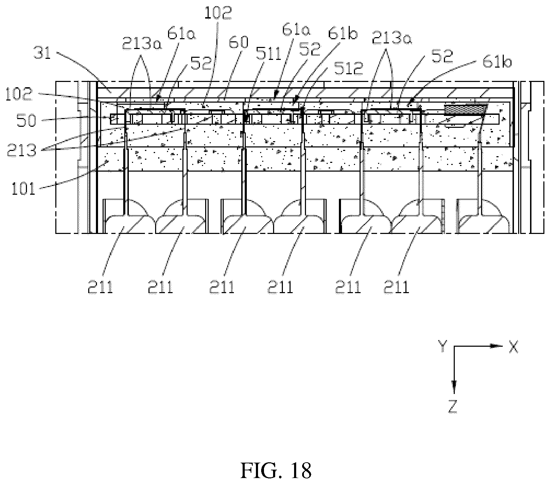

Referring to FIG. 12 and FIG. 15 to FIG. 18, in an embodiment, a first thermally conductive layer 101 is disposed between the cell housing 211 and the first adapter plate 50. Along the first direction X, a projection of the electrode terminal 213 overlaps with a projection of the first thermally conductive layer 101. Through the first thermally conductive layer 101, the electrode terminal 213 between the cell housing 211 and the first adapter plate 50 is fixed, insulated, and enabled to conduct heat.

In an embodiment, the first thermally conductive layer 101 is formed by pouring and curing an insulation material in the battery pack 100. Optionally, the first thermally conductive layer 101 includes at least one of a potting glue or a foam adhesive. Optionally, the first thermally conductive layer 101 is formed by pouring and curing a potting glue in the battery pack 100. Optionally, the first thermally conductive layer 101 is formed by foaming a foam adhesive. Optionally, the first thermally conductive layer 101 includes a resin, and is formed by heating and melting the resin, pouring the flowable resin into the clearance between the cell housing 211 and the first adapter plate 50, and then curing. Optionally, the first thermally conductive layer 101 is injection-molded by putting a flowable resin into the clearance between the cell housing 211 and the first adapter plate 50 and then curing. The first thermally conductive layer 101 fills the clearance between the cell housing 211 and the first adapter plate 50, strengthens the insulative protection between the electrode terminal 213 and the first adapter plate 50, and restricts foreign matters such as water and dust from entering the clearance between the cell housing 211 and the first adapter plate 50.

In an embodiment, a second thermally conductive layer 102 is disposed between the first insulation piece 60 and the first adapter plate 50. Along the first direction X, the projection of the welding portion 213a of the electrode terminal 213 overlaps with the projection of the second thermally conductive layer 102. The projection of the first electrically conductive strip 52 overlaps with the projection of the second thermally conductive layer 102. The projection of the first electrically conductive piece 24 overlaps with the projection of the second thermally conductive layer 102. Through the second thermally conductive layer 102, the welding portion 213a, the first electrically conductive piece 24, and the first electrically conductive strip 52 are fixed, insulated, and enabled to conduct heat.

In an embodiment, the second thermally conductive layer 102 is formed by pouring and curing an insulation material in the battery pack 100. Optionally, the second thermally conductive layer 102 includes at least one of a potting glue or a foam adhesive. Optionally, the second thermally conductive layer 102 is formed by pouring and curing a potting glue in the battery pack 100. Optionally, the second thermally conductive layer 102 is formed by foaming a foam adhesive. Optionally, the second thermally conductive layer 102 includes a resin, and is formed by heating and melting the resin, pouring the flowable resin into the clearance between the first insulation piece 60 and the first adapter plate 50, and then curing. Optionally, the second thermally conductive layer 102 is injection-molded by putting a flowable resin into the clearance between the cell housing 211 and the first adapter plate 50 and then curing. The second thermally conductive layer 102 fills the clearance between the first insulation piece 60 and the first adapter plate 50, strengthens the insulative protection between the first insulation piece 60 and the first adapter plate 50, and restricts foreign matters such as water and dust from entering the clearance between the first insulation piece 60 and the first adapter plate 50.

In an embodiment, the first connecting piece 30 is disposed on one side of the first insulation piece 60, the one side of the first insulation piece 60 being a side facing away from the first adapter plate 50. The heat of the electrode terminal 213 is transferred to the second thermally conductive layer 102 through the first thermally conductive layer 101, and then transferred from the second thermally conductive layer 102 to the first connecting piece 30. Optionally, a third thermally conductive layer (not shown in the drawing) is disposed between the first insulation piece 60 and the first connecting piece 30. The heat is transferred from the second thermally conductive layer 102 to the third thermally conductive layer, and then from the third thermally conductive layer to the first connecting piece 30. Subsequently, the heat of the first cell row 20a is dissipated by the first connecting piece 30. The third thermally conductive layer added can improve the efficiency of transferring the heat of the battery cells 21 to the first connecting piece 30. Optionally, the third thermally conductive layer includes a thermal adhesive.

In an embodiment, the first main body 61 is provided with a first through-hole 61a. The first through-hole 61a runs through the first main body 61. The flowable thermally conductive insulation material flows into the clearance between the first insulation piece 60 and the first connecting piece 30 through the first through-hole 61a. In an embodiment, the third thermally conductive layer is formed by pouring and curing an insulation material in the battery pack 100. Optionally, the third thermally conductive layer includes at least one of a potting glue or a foam adhesive. Optionally, the third thermally conductive layer is formed by pouring and curing a potting glue in the battery pack 100. Optionally, the third thermally conductive layer is formed by foaming a foam adhesive. Optionally, the third thermally conductive layer includes a resin, and is formed by heating and melting the resin, pouring the flowable resin into the clearance between the first insulation piece 60 and the first connecting piece 30, and then curing. Optionally, the third thermally conductive layer is injection-molded by putting a flowable resin into the clearance between the first insulation piece 60 and the first connecting piece 30 and then curing. The third thermally conductive layer fills the clearance between the first insulation piece 60 and the first connecting piece 30, strengthens the insulative protection between the first insulation piece 60 and the first connecting piece 30, and restricts foreign matters such as water and dust from entering the clearance between the first insulation piece 60 and the first connecting piece 30.

In an embodiment, the first thermally conductive layer 101, the second thermally conductive layer 102, and the third thermally conductive layer are formed by curing the same material. First, a quick-curing quick-drying insulation material, such as quick-drying adhesive or foam adhesive, is injected into the fifth opening 611, the sixth opening 613, and the seventh opening 615. The first bulge 612, the second bulge 614, and the third bulge 616 restrict the insulation material from flowing to other positions of the first main body 61. The cured insulation material closes the fifth opening 611, the sixth opening 613, and the seventh opening 615. Subsequently, the battery pack 100 is assembled as shown in FIG. 10, and then inverted along a direction opposite to the third direction Z. Subsequently, a flowable insulation material is injected through a pouring channel. The insulation material flows into the clearance between the cell housing 211 and the first adapter plate 50, and can flow to the clearance between the first insulation piece 60 and the first adapter plate 50 through the first communicating hole 511, the second communicating hole 512, and the third communicating hole 513, and can flow into the clearance between the first insulation piece 60 and the first connecting piece 30 through the first through-hole 61a. The flowable insulation material between the first insulation piece 60 and the first connecting piece 30 forms a third thermally conductive layer after curing. The flowable insulation material between the first insulation piece 60 and the first adapter plate 50 forms a second thermally conductive layer 102 after curing. The flowable insulation material between the cell housing 211 and the first adapter plate 50 forms a first thermally conductive layer 101 after curing. Optionally, when the battery pack 100 is inverted, the clearance between the battery cells 21 may be used as a pouring channel. When the flowable insulation material is injected through the pouring channel, the first thermally conductive layer 101, the second thermally conductive layer 102, and the third thermally conductive layer are made of the same insulation material. The first thermally conductive layer 101, the second thermally conductive layer 102, and the third thermally conductive layer are formed by a one-time injection process, thereby facilitating production.

In an embodiment, along the third direction Z, the projection of the first through-hole 61a overlaps with the projection of the electrode terminal 213, thereby making it convenient for the thermally conductive insulation material to flow into the clearance between the first insulation piece 60 and the first connecting piece 30 from the first through-hole 61a.

In an embodiment, a first bump 61b is disposed on one side of the first main body 61, the side facing the first adapter plate 50. When the first insulation piece 60 is connected to the first adapter plate 50, the first bump 61b can be in contact with and connected to the first adapter plate 50. Supported by the first bump 61b, a clearance is provided between the first insulation piece 60 and the first adapter plate 50 to accommodate the second thermally conductive layer 102. Understandably, the size of the clearance between the first insulation piece 60 and the first adapter plate 50 can be adjusted by adjusting the length of the first bump 61b along the third direction Z, thereby adjusting the amount of the second thermally conductive layer 102 between the first insulation piece 60 and the first adapter plate 50.

In an embodiment, the battery pack 100 further includes a second adapter plate 70. The second adapter plate 70 is connected to the second cell row 20b. A plurality of second electrically conductive strips 71 are disposed on one side of the second adapter plate 70, the side facing away from the battery cell 21. The second adapter plate 70 includes the same number of holes as the first adapter plate 50. The first terminal 213b of one of two adjacent battery cells 21 passes through the second adapter plate 70, and the second terminal 213c of the other battery cell 21 passes through the second adapter plate 70. The welding portion 213a of the first terminal 213b and the welding portion 213a of the second terminal 213c are stacked together, and then welded to the second electrically conductive strip 71. The welding includes laser welding, ultrasonic welding, and the like. In some other embodiments, the welding portion 213a may be connected to the second electrically conductive strip 71 by other means such as conductive adhesive.

In an embodiment, the second adapter plate 70 includes a circuit board. Optionally, the second adapter plate 70 includes a printed circuit board (PCB, Printed Circuit Board). The second adapter plate 70 is populated with a plurality of traces (not shown in the drawing). Optionally, the second adapter plate 70 may be a flexible circuit board (FPC, Flexible Printed Circuit).

In an embodiment, the battery pack 100 further includes a second electrical connecting portion 72 connected to the second adapter plate 70. The second electrical connecting portion 72 includes a second electrically conductive portion 721 and a second insulation portion 722. The second insulation portion 722 is sleeved on the second electrically conductive portion 721. Both ends of the second electrically conductive portion 721 extend out of the second insulation portion 722. One end of the second electrically conductive portion 721 is connected to the second electrically conductive strip 71, and another end is connected to the circuit board 40. In an embodiment, the second electrically conductive portion 721 and the second electrically conductive strip 71 are a one-piece structure. In an embodiment, the second adapter plate 70 is further provided with a second sampling harness 73. The second sampling harness 73 is connected to the circuit board 40. The second sampling harness 73 can collect information such as current, voltage, and temperature of the battery cell 21.

In an embodiment, the battery pack 100 further includes a second insulation piece 80. The second insulation piece 80 is disposed on one side of the second electrically conductive strip 71, the one side of second electrically conductive strip 71 being a side facing away from the battery cell 21, and is configured to provide insulative protection for the second electrically conductive strip 71 and the electrode terminal 213. The second insulation piece 80 includes a second main body 81 and a second side plate 82 extending from the edge of the second main body 81. Along the third direction Z, a projection of the second adapter plate 70 overlaps with a projection of the second main body 81. Optionally, the projection of the second adapter plate 70 is located within the projection of the second main body 81. In this way, the second main body 81 covers the second electrically conductive portion 721 and the electrode terminal 213. Along the first direction X or the second direction Y, the projection of the second side plate 82 overlaps with the projection of the second adapter plate 70. Further, along the first direction X or the second direction Y, the projection of the second electrically conductive strip 71 is located within the projection of the second side plate 82.

In an embodiment, the second main body 81 is provided with an eighth opening 811. The eighth opening 811 runs through the surface of the second main body 81 along the third direction Z. The second electrical connecting portion 72 passes through the eighth opening 811, and then extends to one side of the second main body 81, the one side of the second main body 81 being a side facing away from the second adapter plate 70. Optionally, the second main body 81 is provided with a fourth bulge 812. The fourth bulge 812 is disposed at the edge of the eighth opening 811. Through the fourth bulge 812, the second electrical connecting portion 72 is constrained. Along the second direction Y, the projection of the second electrically conductive portion 721 is located within the projection of the fourth bulge 812. The fourth bulge 812 insulates one end of the second electrically conductive portion 721, the end extending out of the second insulation portion 722, thereby reducing the risk of a short circuit of the part that extends out of the second insulation portion 722 on the second electrically conductive portion 721. Optionally, along the second direction Y, the projection of the second insulation portion 722 overlaps with the projection of the fourth bulge 812, thereby further improving the insulation of the extension-out part of the second electrically conductive portion 721.

In an embodiment, the second main body 81 is provided with a ninth opening 813. The ninth opening 813 runs through the surface of the second main body 81 along the third direction Z. The first electrically conductive piece 24 passes through the ninth opening 813, and is connected to the second electrically conductive strip 71. Optionally, the second main body 81 is provided with a fifth bulge 814. The fifth bulge 814 is located at the edge of the ninth opening 813. Along the second direction Y, the projection of the first electrically conductive piece 24 overlaps with the projection of the fifth bulge 814. Through the fifth bulge 814, the first electrically conductive piece 24 is constrained and insulated. Along the second direction Y, a part of the structure of the fifth bulge 814 is located between the first electrically conductive piece 24 and the first connecting piece 30, thereby reducing the risk of a short circuit between the first electrically conductive piece 24 and the first connecting piece 30.

In an embodiment, the second main body 81 is provided with a tenth opening 815. The tenth opening 815 runs through the surface of the second main body 81. A sixth bulge 816 is disposed at the edge of the tenth opening 815. The second sampling harness 73 passes through the second main body 81 through the tenth opening 815, and is connected to the circuit board 40.

In an embodiment, a fourth thermally conductive layer (not shown in the drawing) is disposed between the cell housing 211 and the second adapter plate 70. Along the first direction X, a projection of the electrode terminal 213 overlaps with a projection of the fourth thermally conductive layer. Through the fourth thermally conductive layer, the electrode terminal 213 between the cell housing 211 and the second adapter plate 70 is fixed, insulated, and enabled to conduct heat.

In an embodiment, the fourth thermally conductive layer is formed by pouring and curing an insulation material in the battery pack 100. Optionally, the fourth thermally conductive layer includes at least one of a potting glue or a foam adhesive. Optionally, the fourth thermally conductive layer is formed by pouring and curing a potting glue in the battery pack 100. Optionally, the fourth thermally conductive layer is formed by foaming a foam adhesive. Optionally, the fourth thermally conductive layer includes a resin, and is formed by heating and melting the resin, pouring the flowable resin into the clearance between the cell housing 211 and the second adapter plate 70, and then curing. Optionally, the fourth thermally conductive layer is injection-molded by putting a flowable resin into the clearance between the cell housing 211 and the second adapter plate 70 and then curing. The fourth thermally conductive layer fills the clearance between the cell housing 211 and the second adapter plate 70, strengthens the insulative protection between the electrode terminal 213 and the second adapter plate 70, and restricts foreign matters such as water and dust from entering the clearance between the cell housing 211 and the second adapter plate 70.

In an embodiment, a fifth thermally conductive layer (not shown in the drawing) is disposed between the second insulation piece 80 and the second adapter plate 70. Along the first direction X, the projection of the welding portion 213a of the electrode terminal 213 overlaps with the projection of the fifth thermally conductive layer. The projection of the second electrically conductive strip 71 overlaps with the projection of the fifth thermally conductive layer. The projection of the first electrically conductive piece 24 overlaps with the projection of the fifth thermally conductive layer. Through the fifth thermally conductive layer, the welding portion 213a, the first electrically conductive piece 24, and the second electrically conductive strip 71 are fixed, insulated, and enabled to conduct heat.

In an embodiment, the fifth thermally conductive layer is formed by pouring and curing an insulation material in the battery pack 100. Optionally, the fifth thermally conductive layer includes at least one of a potting glue or a foam adhesive. Optionally, the fifth thermally conductive layer is formed by pouring and curing a potting glue in the battery pack 100. Optionally, the fifth thermally conductive layer is formed by foaming a foam adhesive. Optionally, the fifth thermally conductive layer includes a resin, and is formed by heating and melting the resin, pouring the flowable resin into the clearance between the second insulation piece 80 and the second adapter plate 70, and then curing. Optionally, the fifth thermally conductive layer is injection-molded by putting a flowable resin into the clearance between the second insulation piece 80 and the second adapter plate 70 and then curing. The fifth thermally conductive layer fills the clearance between the second insulation piece 80 and the second adapter plate 70, strengthens the insulative protection between the second insulation piece 80 and the second adapter plate 70, and restricts foreign matters such as water and dust from entering the clearance between the second insulation piece 80 and the second adapter plate 70.

In an embodiment, the first connecting piece 30 is disposed on one side of the second insulation piece 80, the one side of the second insulation piece 80 being a side facing away from the second adapter plate 70. The heat of the electrode terminal 213 is transferred to the fifth thermally conductive layer through the fourth thermally conductive layer, and then transferred from the fifth thermally conductive layer to the first connecting piece 30. Optionally, a sixth thermally conductive layer (not shown in the drawing) is disposed between the second insulation piece 80 and the first connecting piece 30. The heat of the electrode terminal 213 is transferred to the fifth thermally conductive layer through the fourth thermally conductive layer, and then from the fifth thermally conductive layer to the sixth thermally conductive layer, and then from the sixth thermally conductive layer to the first connecting piece 30. Subsequently, the heat of the second cell row 20b is dissipated by the first connecting piece 30. The sixth thermally conductive layer added can improve the efficiency of transferring the heat of the battery cells 21 to the first connecting piece 30. Optionally, the sixth thermally conductive layer includes a thermal adhesive.

In an embodiment, the second main body 81 is provided with a second through-hole 81a. The second through-hole 81a runs through the second main body 81. The flowable thermally conductive insulation material flows into the clearance between the second insulation piece 80 and the first connecting piece 30 through the second through-hole 81a. In an embodiment, the sixth thermally conductive layer is formed by pouring and curing an insulation material in the battery pack 100. Optionally, the sixth thermally conductive layer includes at least one of a potting glue or a foam adhesive. Optionally, the sixth thermally conductive layer is formed by pouring and curing a potting glue in the battery pack 100. Optionally, the sixth thermally conductive layer is formed by foaming a foam adhesive. Optionally, the sixth thermally conductive layer includes a resin, and is formed by heating and melting the resin, pouring the flowable resin into the clearance between the second insulation piece 80 and the first connecting piece 30, and then curing. Optionally, the sixth thermally conductive layer is injection-molded by putting a flowable resin into the clearance between the second insulation piece 80 and the first connecting piece 30 and then curing. The sixth thermally conductive layer fills the clearance between the second insulation piece 80 and the first connecting piece 30, strengthens the insulative protection between the second insulation piece 80 and the first connecting piece 30, and restricts foreign matters such as water and dust from entering the clearance between the second insulation piece 80 and the first connecting piece 30.

In an embodiment, the fourth thermally conductive layer, the fifth thermally conductive layer, and the sixth thermally conductive layer are formed by curing the same material. First, a quick-curing quick-drying insulation material, such as quick-drying adhesive or foam adhesive, is injected into the eighth opening 811, the ninth opening 813, and the tenth opening 815. The fourth bulge 812, the fifth bulge 814, and the sixth bulge 816 restrict the insulation material from flowing to other positions of the second main body 81. The cured insulation material closes the eighth opening 811, the ninth opening 813, and the tenth opening 815. Subsequently, the battery pack 100 is assembled as shown in FIG. 10, and then inverted along a direction opposite to the third direction Z. Subsequently, a flowable insulation material is injected through a pouring channel. The insulation material flows into the clearance between the cell housing 211 and the second adapter plate 70, and can flow to the clearance between the second insulation piece 80 and the second adapter plate 70 through the hole on the second adapter plate 70, and can flow into the clearance between the second insulation piece 80 and the first connecting piece 30 through the second through-hole 81a. The flowable insulation material between the second insulation piece 80 and the first connecting piece 30 forms a sixth thermally conductive layer after curing. The flowable insulation material between the second insulation piece 80 and the second adapter plate 70 forms a fifth thermally conductive layer after curing. The flowable insulation material between the cell housing 211 and the second adapter plate 70 forms a fourth thermally conductive layer after curing. Optionally, when the battery pack 100 is inverted, the clearance between the battery cells 21 may be used as a pouring channel. When the flowable insulation material is injected through the pouring channel, the fourth thermally conductive layer, the fifth thermally conductive layer, and the sixth thermally conductive layer are made of the same insulation material. The fourth thermally conductive layer, the fifth thermally conductive layer, and the sixth thermally conductive layer are formed by a one-time injection process, thereby facilitating production.

In an embodiment, along the third direction Z, the projection of the second through-hole 81a overlaps with the projection of the electrode terminal 213, thereby making it convenient for the thermally conductive insulation material to flow into the clearance between the second insulation piece 80 and the first connecting piece 30 from the second through-hole 81a.

In an embodiment, a second bump 81b is disposed on one side of the second main body 81, the side facing the second adapter plate 70. When the second insulation piece 80 is connected to the second adapter plate 70, the second bump 81b can be in contact with and connected to the second adapter plate 70. Supported by the second bump 81b, a clearance is provided between the second insulation piece 80 and the second adapter plate 70 to accommodate the fifth thermally conductive layer. Understandably, the size of the clearance between the second insulation piece 80 and the second adapter plate 70 can be adjusted by adjusting the length of the second bump 81b along the third direction Z, thereby adjusting the amount of the fifth thermally conductive layer between the second insulation piece 80 and the second adapter plate 70.

In an embodiment, the first thermally conductive layer 101, the second thermally conductive layer 102, the third thermally conductive layer, the fifth thermally conductive layer, the sixth thermally conductive layer, and the seventh thermally conductive layer each include a thermal adhesive and a thermal pad.

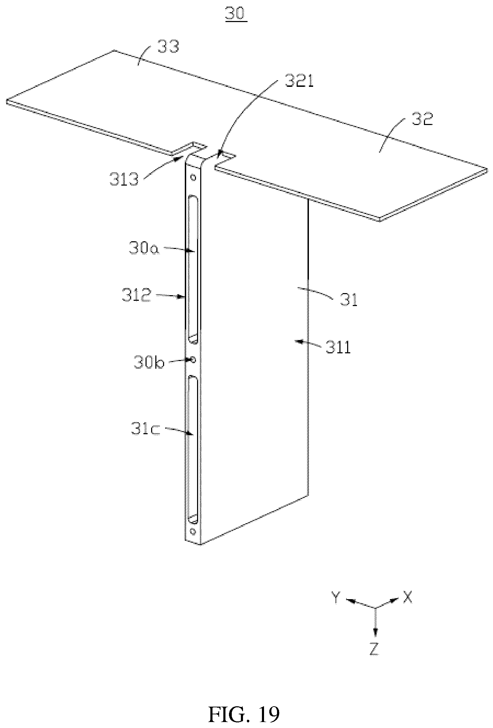

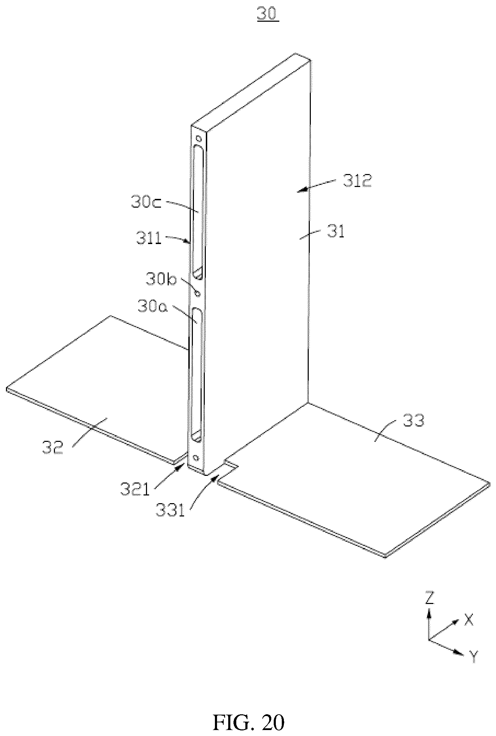

Referring to FIG. 12, FIG. 16, FIG. 18, FIG. 19, and FIG. 20, in an embodiment, the first connecting piece 30 includes a first part 31 and a second part 32. The first part 31 is connected to the second part 32. The first channel 30a and the second connecting hole 30b are disposed on the first part 31. The first channel 30a runs through the first part 31 along the first direction X. The first part 31 includes a first surface 311 and a second surface 312 arranged along the second direction Y. Along the second direction Y, a projection of the first surface 311 overlaps with a projection of the first cell row 20a, and a projection of the second surface 312 overlaps with a projection of the second cell row 20b. The heat of the first cell row 20a is conducted by the first surface 311, and the heat of the second cell row 20b is conducted by the second surface 312, thereby implementing heat dissipation. Optionally, along the first direction X, the projection of the first cell row 20a is located within the projection of the first surface 311, and the projection of the second cell row 20b is located within the projection of the second surface 312. In this way, heat can be conducted between each lateral surface of the first cell row 20a and the first surface 311, and heat can be conducted between each lateral surface of the second cell row 20b and the second surface 312, thereby further improving the heat dissipation.

In an embodiment, a thermal adhesive is disposed between the first part 31 and the first cell row 20a to facilitate rapid conduction of heat to the first connecting piece 30, thereby further improving the heat dissipation. In an embodiment, a thermal adhesive is disposed between the first part 31 and the second cell row 20b to facilitate rapid conduction of heat to the first connecting piece 30, thereby further improving the heat dissipation.

In an embodiment, the first part 31 is further provided with a second channel 30c. The second channel 30c runs through the first part 31 along the first direction X. The first channel 30a and the second channel 30c are spaced apart along the third direction Z. With the second channel 30c disposed, the first channel 30a and the second channel 30c can work together to dissipate heat for the battery cell 21, thereby further improving the heat dissipation efficiency. Understandably, the number of channels on the first part 31 may be adjusted according to the heat dissipation requirements and the length of the first part 31 along the third direction Z. The greater the length of the first part 31, the greater the number of channels that can be disposed. Understandably, with the increase in the number of channels, the number of openings on the first housing 11 and the second housing 12 also needs to increase.

In an embodiment, the second part 32 is perpendicular to the first part 31. The second part 32 is disposed on one side of the first insulation piece 60, the side facing away from the first adapter plate 50. Along the third direction Z, both the projection of the first electrically conductive strip 52 and the projection of the first through-hole 61a located within the projection of the second part 32. Optionally, a third thermally conductive layer is disposed between the second part 32 and the first main body 61. The heat of the first cell row 20a is conducted to the second part 32 through the third thermally conductive layer, and then from the second part 32 to the first part 31. The air that flows in the first channel 30a takes away the heat on the first part 31, thereby implementing heat dissipation of the first cell row 20a.

In an embodiment, a first notch 321 is provided on the second part 32 on one side connected to the first part 31. The first electrically conductive piece 24 is connected to the first electrically conductive strip 52 through the first notch 321.

In an embodiment, the first connecting piece 30 further includes a third part 33. The third part 33 is connected to the first part 31. The third part 33 is perpendicular to the first part 31. The third part 33 is disposed on one side of the second insulation piece 80, the side facing away from the second adapter plate 70. Along the third direction Z, both the projection of the second electrically conductive strip 71 and the projection of the second through-hole 81a located within the projection of the third part 33. Optionally, a sixth thermally conductive layer is disposed between the third part 33 and the second main body 81. The heat of the second cell row 20b is conducted to the third part 33 through the sixth thermally conductive layer, and then from the third part 33 to the first part 31. The air that flows in the first channel 30a takes away the heat on the first part 31, thereby implementing heat dissipation of the second cell row 20b.

In an embodiment, a second notch 331 is provided on the third part 33 on one side connected to the first part 31. The first electrically conductive piece 24 is connected to the second electrically conductive strip 71 through the second notch 331. When the first electrically conductive piece 24 is connected to the first electrically conductive strip 52 and the second electrically conductive strip 71, when viewed along the first direction X, the first part 31 is partially located in the second recess 241.

In an embodiment, the first part 31, the second part 32, and the third part 33 are a one-piece structure.

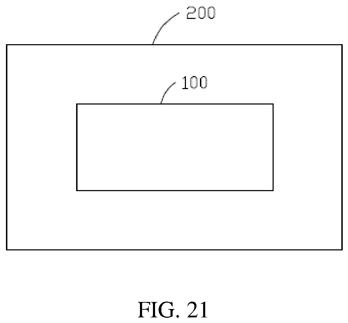

Referring to FIG. 21, this application further provides an electrical device 200 that employs the battery pack 100. In an embodiment, the electrical device 200 of this application may be, but is not limited to, an unmanned aerial vehicle, a backup power supply, an electric vehicle, an electric motorcycle, an electric power-assisted bicycle, an electric tool, a large household storage battery, or the like.

A person of ordinary skill in the art understands that some foregoing embodiments are merely intended to illustrate this application, but not intended to limit this application. All appropriate modifications and changes made to some embodiments without departing from the spirit and conception of this application still fall within the protection scope of this application.

## Claims

1. A battery pack, **characterized in that** the battery pack comprises:
a housing assembly provided with a first space, the housing assembly comprises a first opening and a second opening both communicating with the first space;
a first connecting piece accommodated in the first space, the first connecting piece is provided with a first channel, and the first opening communicates with the second opening through the first channel; and
a cell assembly, at least a part of the cell assembly is disposed in the first space; wherein, along a first direction, a projection of the first opening and a projection of the cell assembly are spaced apart from each other, a projection of the second opening and the projection of the cell assembly are spaced apart from each other, and the first direction is a stacking direction of battery cells in the cell assembly.

2. The battery pack according to claim 1, **characterized in that** the housing assembly comprises a first housing; the first housing comprises a first wall, a first sidewall, a second sidewall, a third sidewall, and a fourth sidewall; the first wall is connected to the first sidewall, the second sidewall, the third sidewall, and the fourth sidewall to form the first space;
the first opening is provided on the first sidewall; the second opening is provided on the second sidewall; the first sidewall and the second sidewall are arranged along the first direction; the third sidewall and the fourth sidewall are arranged along a second direction; and the first direction is perpendicular to the second direction.

3. The battery pack according to claim 2, **characterized in that** the first connecting piece comprises a first part, the first channel is disposed in the first part; and, along the second direction, the first part is located between the third sidewall and the fourth sidewall.

4. The battery pack according to claim 3, **characterized in that** the first connecting piece comprises a second part connected to the first part; and, along a third direction, the cell assembly is located between the first wall and the second part, and the third direction is perpendicular to both the first direction and the second direction.

5. The battery pack according to any one of claims 2 to 4, **characterized in that** the cell assembly comprises a first cell row; the first cell row comprises a plurality of battery cells stacked along the first direction; and each battery cell comprises a cell housing, an electrode assembly disposed in the cell housing, and an electrode terminal connected to the electrode assembly and led out of the cell housing.

6. The battery pack according to claim 5, **characterized in that** the cell assembly further comprises a second cell row, the first cell row and the second cell row are arranged along the second direction; and, along the second direction, the first part is disposed between the first cell row and the second cell row.

7. The battery pack according to claim 6, **characterized in that** the first connecting piece further comprises a third part, the third part is connected to the first part; and, along the third direction, the first cell row is located between the second part and the first wall, and the second cell row is located between the third part and the first wall.

8. The battery pack according to claim 7, **characterized in that** the battery pack further comprises a first electrically conductive piece, the second part is provided with a first notch, the third part is provided with a second notch, one end of the first electrically conductive piece is connected to the first cell row, another end of the first electrically conductive piece is connected to the second cell row, a part of the first electrically conductive piece passes through the first notch, and another part of the first electrically conductive piece passes through the second notch.

9. The battery pack according to claim 5, **characterized in that** the battery pack further comprises a first insulation piece and a first adapter plate; the first adapter plate is connected to the electrode terminal; the first insulation piece is disposed on one side of the first adapter plate, the one side of the first adapter plate being a side facing away from the cell assembly; along the second direction, a projection of the first adapter plate overlaps with a projection of the first insulation piece, and a projection of the electrode terminal overlaps with the projection of the first insulation piece.

10. The battery pack according to claim 9, **characterized in that** a first thermally conductive layer is disposed between the first adapter plate and the cell housing; and, along the first direction, a projection of the electrode terminal overlaps with a projection of the first thermally conductive layer.

11. The battery pack according to claim 10, **characterized in that** a second thermally conductive layer is disposed between the first insulation piece and the first adapter plate; and, along the first direction, a projection of the electrode terminal overlaps with a projection of the second thermally conductive layer.

12. The battery pack according to claim 11, **characterized in that** the first thermally conductive layer and the second thermally conductive layer are made of a same material, and the first thermally conductive layer and the second thermally conductive layer are formed by curing a flowing insulation material that flows in.

13. The battery pack according to claim 9, **characterized in that** the second part is disposed on one side of the first insulation piece, the one side of the first insulation piece being a side facing away from the first adapter plate, and a third thermally conductive layer is disposed between the second part and the first insulation piece.

14. An electrical device, **characterized in that** the electrical device comprises the battery pack according to any one of claims 1 to 13.
